# EUROPEAN PATENT SPECIFICATION

(11) **EP 0 162 536 B1**
(45) Date of publication and mention of the grant of the patent: **10.01.1996**
(21) Application number: 85301145.0
(22) Date of filing: 20.02.1985
(51) Int. Cl.: B01D 53/50

(54) **Apparatus for wet type flue gas desulfurization**
Apparat für die nasse Rauchgasentschwefelung
Appareil pour la désulfurisation mouillée de gaz brûlé

(30) Priority: 20.02.1984 JP 28764/84
(43) Date of publication of application: 27.11.1985
(73) Proprietor: BABCOCK-HITACHI KABUSHIKI KAISHA, Tokyo 100 (JP)
(72) Inventor: Kuroda, Hiroshi Kure Works, Kure-shi Hiroshima-ken (JP); Nishimura, Tsukasa Kure Works, Kure-shi Hiroshima-ken (JP); Kanda, Osamu Kure Works, Kure-shi Hiroshima-ken (JP); Nozawa, Shigeru Kure Works, Kure-shi Hiroshima-ken (JP); Mizoguchi, Tadaaki Kure Reasearch Laboratory, Kure-shi Hiroshima-ken (JP)
(74) Representative: Jenkins, Peter David

(56) References cited:
- DE-A- 3 008 718
- DE-A- 3 011 592
- CHEMIE-INGENIEUR-TECHNIK, vol. 55, no. 9, 1983, Weinheim; W. KAMINSKY "Verfahren zur Entschwefelung von Rauchgas", pages 667-678

## Description

This invention relates to a circulation tank adapted to be provided in an apparatus for wet type flue gas desulfurization, and more particularly to such a circulation tank which provides improved stirring of, and feeding of air to, absorbent slurry for absorbing and removing sulfur oxides (hereinafter denoted as SOₓ) from flue gas.

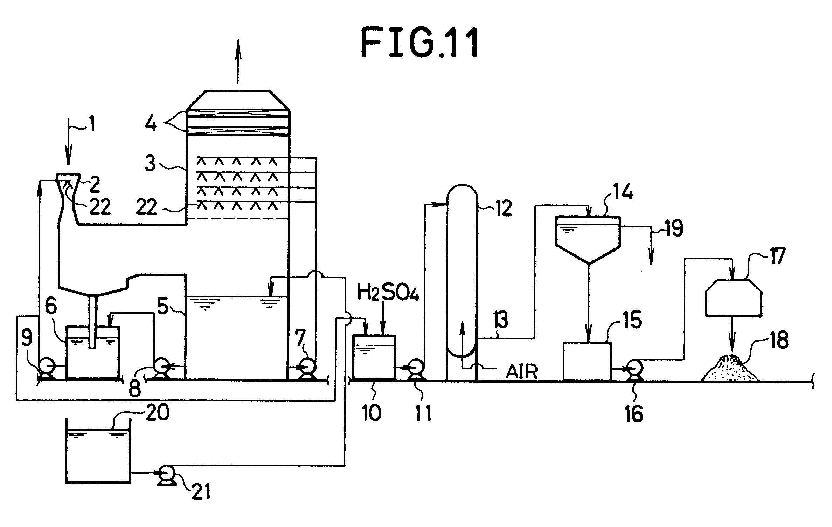

The apparatus for wet type flue gas desulfurization which has in the past been practically employed is mainly an apparatus wherein a calcium absorbent is used to absorb sulphur-containing constituents in the flue gas and gypsum is recovered as a by-product. Namely, it is directed to an apparatus using the so-called "limestone-gypsum process" (or lime-gypsum process) using limestone, quick lime or slaked lime as the absorbent. Figure 11 shows a conventional apparatus for flue gas desulfurization wherein limestone is used as the absorbent and gypsum is recovered as a by-product. Exhaust gas 1 from a boiler or the like is led to a dust-removing tower 2 where it is cooled, dust is removed from the gas and the gas is partly desulfurized. The resulting gas is then led to absorption tower 3 where it is contacted with a circulating slurry, demisted by demistor 4 and discharged from the absorption tower. A limestone slurry 20 for use as an absorbent is fed by limestone slurry pump 21 to circulating tank 5 in the absorption tower, from which it is then fed by circulating pump 7 to a spray nozzle 22 provided inside the absorption tower. The limestone slurry is sprayed within the tower from spray nozzle 22 and, contacts the exhaust gas. The limestone slurry absorbs and removes SOₓ contained in the exhaust gas and is returned to the circulating tank from which it is reused by virtue of the circulation described above. The slurry after the absorption is fed by bleed pump 8 from the absorption tower to a circulating tank 6 associated with the dust-removing tower 2. Slurry is pumped from circulating tank 6 by pump 9 into a spray nozzle 22 in the dust-removing tower 2. The sprayed slurry contacts the exhaust gas inside the dust-removing tower whereby SOₓ contained in the exhaust gas is removed and thereby the amount of unreacted limestone in the slurry is reduced. The resulting slurry is fed to a by-product recovery system i.e. feed tank 10 for oxidation tower 12 where unreacted limestone is converted into a calcium sulfite by adding sulfuric acid thereto, and also the slurry is adjusted to a pH suitable for oxidation. The pH-adjusted slurry is fed by a feed pump 11 to an oxidation tower 12 where calcium sulfite is oxidized with air into gypsum, and is then led via duct 13 to thickener 14 where it is concentrated. The resulting gypsum slurry is dehydrated by centrifugal separator 17 to recover powdery gypsum 18. Filtered water from thickener 14 and centrifugal separator 17 is circulated and reused.

According to such prior art, however, the absorption tower and the dust-removing tower are separately provided, and an apparatus for neutrilizing unreacted limestone contained in the slurry withdrawn from the absorption system (tank, pump, etc. for sulfuric acid) and an apparatus for oxidizing calcium sulfite are required; hence such drawbacks have been raised that the site area increases and the facilities become complicated. Further, utilities for unreacted limestone (excess limestone) and sulfuric acid to be added are required.

For the above reasons, a compact desulfurization apparatus has been desired which reduces such utilities for these chemical agents, simplifies facilities and has a small site area.

The known wet type flue gas desulfurization apparatus shown in Figure 11 also suffers from the problem that the oxidation of sulphur compounds in the slurry in the circulation tank is of low uniformity and low efficiency.

The present invention aims to solve this problem of the prior art.

Accordingly, the present invention provides a circulation tank adapted to be provided in an apparatus for wet type exhaust gas desulfurization and to receive an absorbent slurry into which sulfur oxide(s) contained in the exhaust gas is (are) absorbed outside the tank whereby calcium sulfite is formed, said tank including stirring means for stirring said slurry, a piping for feeding absorbing liquid to the tank and means for withdrawing the resulting slurry from the tank, characterised in that said stirring means includes lower stirring means and upper stirring means disposed above said lower stirring means and mounted on the sides of the tank and air-feeding means arranged only in the vicinity of the upper stirring means.

Preferably, said circulation tank includes a plurality of said upper stirring means spaced at a predetermined circumferential distance from each other, and said lower stirring means is provided at the opposite side to a circulating pump.

More preferably, said upper stirring means and said lower stirring means are propeller-type stirrers.

Still more preferably, said air feeding means is fixed onto and along a shaft and behind a rotating blade of the stirrers of the upper stirring means.

In brief, the circulation tank of the present invention may be used in an apparatus wherein a dust-removing part is incorporated in a conventional absorption tower and also this dust-removing part is devised so as to impart thereto a function of neutralizing unreacted limestone and also a function of oxidation. Namely, the circulation tank of the present invention may be used in an apparatus for wet type flue gas desulfurization wherein SOₓ contained in an exhaust gas is removed with a calcium absorbent and gypsum is recovered as by-product, which apparatus provides the respective means of gas cooling, dust-removal, absorption and removal of SOₓ and removal of entrained mist, within a same apparatus.

Embodiments of the present invention will now be described by way of example only with reference to the accompanying drawings, in which:-
Figure 1 is schematic diagram of an apparatus for wet type flue gas desulfurization;
Figure 2 is a chart illustrating the relation between the pH of the slurry in the circulating tank for the dust-removing part of the apparatus of Figure 1 and the percentage excess of limestone;
Figure 3 is a chart illustrating the relation between the pH of the slurry in the circulating tanks for the dust-removing part and for the absorbing part of the apparatus of Figure 1 and the oxidation rate;
Figure 4 is a chart illustrating the relation between the quantity of air and the oxidation rate;
Figures 5, 6, 7 and 8 are each a schematic diagram of an apparatus for wet type flue gas desulfurization;
Figure 9 shows a side view illustrating an arrangement of a stirrer inside the slurry circulating tank for the dust-removing part and for the absorbing part and an air-feeding pipe in the apparatus of Figure 1 and Figures 5 to 8 in accordance with the present invention.
Figure 10 shows a cross-sectional view of the arrangement shown in Figure 9; and
Figure 11 is a schematic diagram of a further conventional apparatus for wet type flue gas desulfurization. It should be understood that Figures 1 and 5 to 8 do not show embodiments of the present invention except when taken in conjunction with Figures 9 and 10.

The present invention will be described in more detail referring to the accompanying drawings.

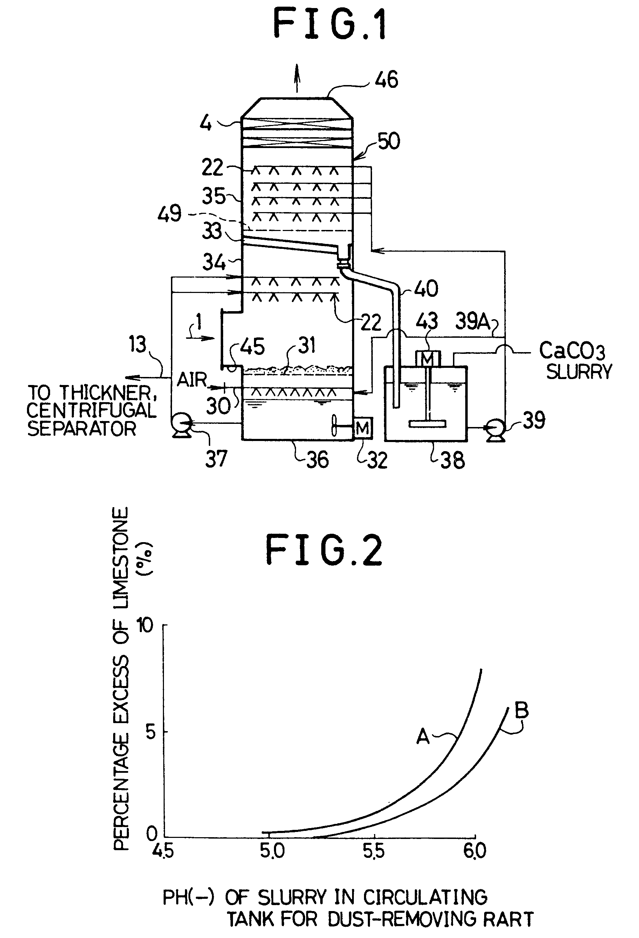

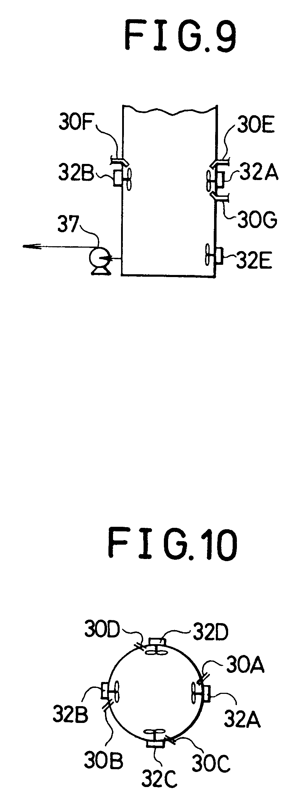

Figure 1 shows, with Figures 9 and 10 as described above, an illustrative view of an apparatus for wet type flue gas desulfurization as an embodiment of the present invention. In this figure, the apparatus is constituted by a vertically arranged, cylindrical tower body 50, a dust-removing part 34 and an absorption part 35 are provided at the lower part and the upper part inside the tower body 50 respectively. A circulation tank 36 for the dust-removing part is provided at the bottom part of the tower body and a stirrer 32 is provided inside the circulation tank 36. An air-feeding pipe 30 having a number of perforations, is arranged for feeding air towards the liquid surface in the circulation tank 36 for the dust-removing part. A screen 31 for oxidation, is provided above the air-feeding pipe 30. A pump 37 and a spray head 22 are provided for feeding and spraying the absorbing liquid which is inside the circulation tank 36 in the dust-removing part 34. A port 45 for feeding exhaust gas 1 into the tower body 50, is provided at the dust-removing part 34. A piping 39A is provided to feed a part of an absorbing liquid inside a second circulation tank 38 for the absorbing liquid, to the circulation tank 36 in the dust-removing part. A spray head 22 for the absorbing liquid, is provided at the absorption part 35 and a collector 33 for the absorbing liquid is provided below the spray head 22, the absorbing liquid being collected at the collector 33 and being passed to the circulation tank 38 by a downcomer 40. A pump 39 feeds the absorbing liquid inside the tank 38 to the spray head 22 at the absorption part 35. A stirrer 43 is provided inside the circulation tank 38. There is further provided a means for feeding an absorbent material (such as CaCO₃) into the circulation tank 38. An exit 46 for the exhaust gas is provided at the top of the tower body and a demistor 4 is provided between the spray head 22 in the absorption part 35 and the exit 46 for the exhaust gas. A line 13 is provided for withdrawing a gypsum-containing liquid from the circulation tank 36, the liquid being pumped from circulation tank 36 by a pump 37.

In use, exhaust gas 1 from a boiler or the like is led to dust-removing part 34 through port 45 at the lower part of absorption tower where dust is removed from the exhaust gas and the gas is cooled and partly desulfurized. The resulting gas ascends past the collector for absorbing liquid 33 and a diffusion plate 49, and is led to absorbing part 35 in the absorption tower where SO₂ contained in the exhaust gas is absorbed and removed by a slurry containing a calcium absorbent (CaCO₃, Ca(OH)₂, CaO). The resulting exhaust gas has an entrained mist which is removed by demistor 4 and is then discharged from the exit at the top part of the absorption tower. The absorbent (CaCO₃ etc.) slurry is fed to tank 38, wherein the slurry is agitated by stirrer 43 and is then fed to absorbing part 35 by circulating pump 39, to absorb SOₓ contained in the exhaust gas. The slurry is sprayed through the spray heads 22 and is then collected by collector 33, returned to circulating tank 38 and reused in the above-described circuit. An embodiment of a suitable collector includes receivers having a U letter form (trough form or half-round pipe form) in cross-section and zigzag arranged at a plurality of stages, as described in Japanese Patent Application No. Sho 58-126363/1983 filed by the present applicants (U.S. Serial No. 51065 filed January 16, 1984). The collector may be composed of a number of funnel-form-like water-collecting means. A part of the above slurry is withdrawn via line 39A to circulating tank 36 for the dust-removing part in an amount corresponding to that of absorbent (CaCO₃) slurry fed. The slurry fed to circulating tank 36 the for dust-removing part, where it is agitated by stirrer 32, is circulated by pump 37 to dust-removing part 34 where it is sprayed through the spray heads 22 and the resultant spray is contacted with the exhaust gas, whereby unreacted limestone contained in the slurry is consumed. Further, air-feeding pipe 30 located above circulating tank 36, feeds air towards the surface of the liquid in the tank 36, and furthermore above the air-feeding pipe 30 is provided a screen 31 for oxidation where the circulating liquid for the dust-removing part (i.e. a circulating liquid having absorbed SO₂ in the tower and having a reduced pH) is efficiently contacted with air, whereby calcium sulfite formed at the time of absorbing SO₂ gas is oxidized into gypsum. The resulting slurry containing gypsum is withdrawn by circulating pump 37 to a thickener and a centrifugal separator wherein gypsum is concentrated and separated, and ultimately gypsum is recovered in the form of powder containing 10 % or less of water. As the screen for oxidation 31, any type which enhances the contact efficiency of the falling calcium sulfite (slurry) with air may be employed, such as those composed of metal gauze, filler or the like. Such metal gauze, filler or the like may be composed of or coated with a metal functioning as an oxidation catalyst.

In order to recover gypsum having good quality, it is necessary to reduce the concentration of unreacted limestone contained in the slurry withdrawn from circulating tank 36 to the thickener and also completely to effect the oxidation of calcium sulfite within the circulating tank 36. It has been found that in order to achieve these conditions, it is necessary to choose adequately the pH of the slurry in circulating tank 36, the capacity of the tank and the quantity of air fed for oxidation.

Figure 2 shows the relation between the pH of slurry in the circulating tank 36 and the percentage excess of limestone. In this figure, A refers to a case where the retention time of slurry in the slurry tank for dust-removing part is relatively short and B, a case where the time is relatively long. In addition, the percentage excess of limestone was determined from the ratio of the concentration of limestone (mol/ℓ) to that of total calcium (mol/ℓ) by analysis of the slurry. It may be seen from Figure 2 that when the pH is reduced, the percentage excess of limestone can be reduced, and also in the case of a larger tank capacity (i.e. the retention time is relatively long), the percentage excess can be reduced.

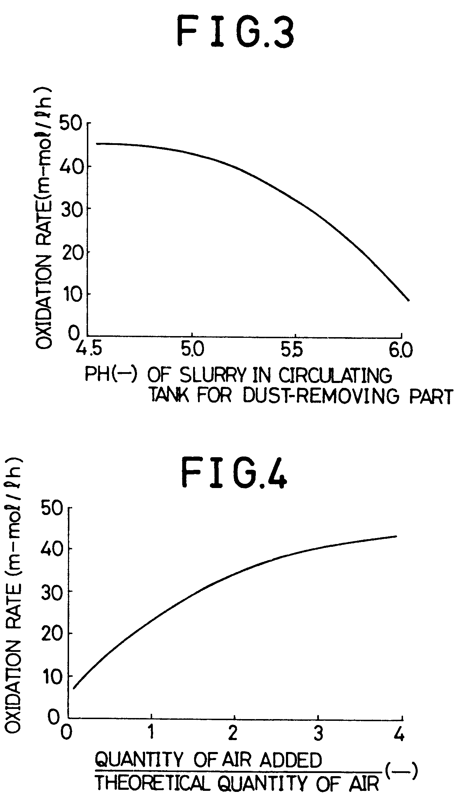

Figure 3 shows the relation between the pH of slurry in the circulating tank 36, obtained by employing the apparatus of Figure 1, and its oxidation rate. In this case, the quantity of air for oxidation was made twice its thoretical quantity and a single stage screen for oxidation 31 was employed. It may be seen from Figure 3 that when the slurry pH is reduced, a higher oxidation rate is obtained, but there is little change in the oxidation rate at pH values below 5.

Figure 4 shows the relation between the quantity of air for oxidation and the oxidation rate, obtained by employing the apparatus of Figure 1. (The pH of the slurry in the circulating tank 36 was 5.5). It may be seen that the oxidation rate increases with increase in the quantity of air, and as to the quantity of air for oxidation, a notable effectiveness is exhibited up to twice its theoretical quantity.

In view of these facts, by reducing the pH of the slurry in the circulating tank 36 (i.e. by keeping the pH at a lower value), it is possible to reduce the percentage excess of limestone and also to raise the oxidation rate. However, if the pH of the slurry used in the dust-removing part 34 is reduced too much, the desulfurization performance in the dust-removing part 34 becomes inferior, which increases the amount of desulfurization required in the absorbing part 35 and hence requires an increase in the quantity of the circulating liquid in the absorbing part 35. Further, when calcium sulfite is oxidized, free calcium sulfite is often partly formed. Thus the variation of the pH of the slurry in the circulating tank 36 becomes greater and hence there is a fear that scale may be formed. On the other hand, regarding the percentage excess of limestone, if the pH of the slurry in the circulating tank 36 is made higher than 5.5, the degree of the desulfurization is reduced, and also regarding the oxidation rate, if the pH of the slurry is made lower than 4.0, the degree of the desulfurization is reduced. Thus it is preferred that the pH of the slurry in the dust-removing part 34 be in the range of from 5.5 to 4.0. Further, concerning the quantity of air for oxidation, in order to obtain a practical oxidation rate, it is preferred to feed the air in at about twice or more its theoretical quantity.

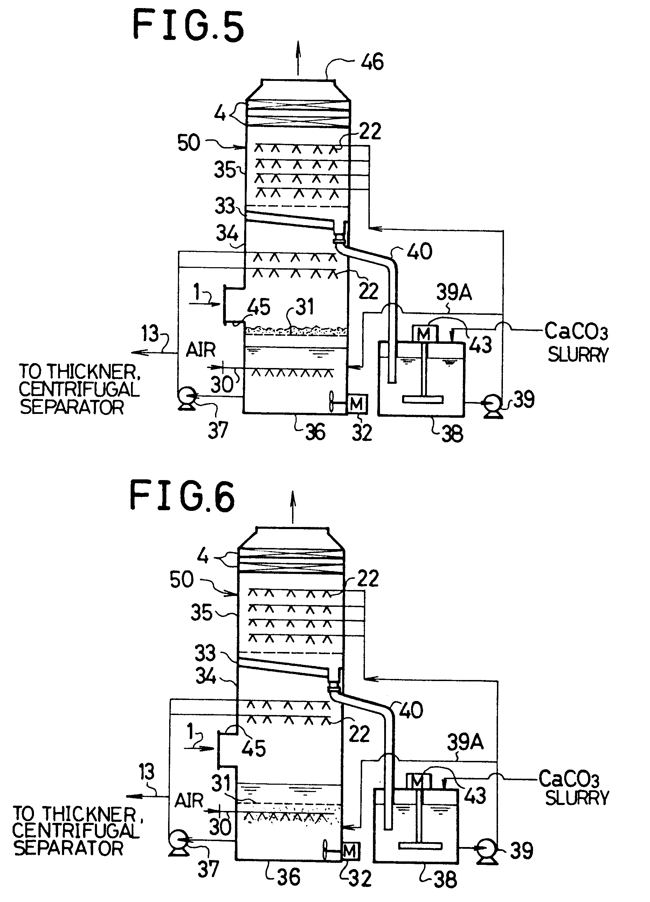

On the other hand, in the case where the quantity of the exhaust gas decreases and/or the concentration of SO₂ decreases, if the quantity of the circulating liquid in the absorbing part is still under a predetermined condition, the desulfurization performance tends to be too high (i.e. exceeding its set value). Further, when the quantity of the exhaust gas decreases and the concentration of SO₂ decreases, the absolute quantity of SO₂ removed decreases and hence the quantity of air required for the oxidation is reduced. Under such conditions, the power used to operate the circulating pumps and to provide the air for oxidation is wasted. When the quantities of the circulating liquids in the absorbing part 35 and/or the dust-removing part 34 are reduced depending on the quantity of the exhaust gas and the concentration of SO₂ (i.e. depending on the load on the system) and also the quantity of air for oxidation is reduced, it is possible to reduce the quantity of power consumed by the apparatus. The reduction in the quantities of the circulating liquids may be carried out by stopping certain pumps or varying the rate of rotation of the pump motors. Further, a similar method may be employed for reducing the quantity of air for oxidation. In the apparatus illustrated in Figure 1, the feed pipe 30 of air for oxidation permits air to be blown towards the liquid surface in the circulating tank 36, taking scaling into account, but as illustrated in Figure 5, the air-feed pipe 30 may be immersed in the liquid retained in the tank 36. According to this arrangement since the circulating liquid is contacted with air in the tank 36, the oxidation rate increases so as to make it possible to reduce the quantity of air required for oxidation. Further, as illustrated in Figure 6, the air-feed pipe 30 and the screen for oxidation 31 may be both immersed in the liquid of the circulating tank 36. According to such a construction, screen for oxidation 31 obstructs the air which is injected into the liquid from ascending so as to make it possible to keep the contact time of air with the circulating liquid to a sufficient value. Further, in this case, when the screen for oxidation 31 is provided in a plurality of stages, its effect can be enhanced.

As mentioned above, the present invention is concerned with improvements in the stirring of absorbent slurry, and the feeding of air to the absorbent slurry which can improve oxidation of sulfur oxide compounds in the slurry. In the present invention, as the air-feeding means provided in the circulating tank 36 besides the pipe 30 optionally having a number of perforations as shown in Figure 1, those as shown in Figure 9 or Figure 10 are also employed wherein air-feeding nozzles 30A to 30G are directed into the circulating tank 36 and are arranged in the vicinity of stirrers 32A to 32D, respectively, the stirrers 32A to 32D being mounted on the sides of the tank 36. It is preferred that the nozzles 30A to 30G be arranged so as to be directed toward blades of the stirrers 32A to 32D so that air fed through the respective nozzles 30A to 30G can collide against the blades so that the jets of air can be broken up and finely dispersed in the liquid. When such a means is employed, slurry agitation and the breaking up and dispersal of fed air are achieved at the same time to make it possible to effect oxidation of calcium sulfite uniformly and with a high efficiency. In Figure 9, the stirrer 32E provided below the air-feeding nozzle 30G prevents the pump 37 from causing an air cavitation.

As for the stirrers 32A to 32D, besides those which are arranged in the radial direction of the circular tank 36 (i.e. in a manner directed to its center), as shown in these figures, the stirrers may be provided in slant manner so that the flow formed by agitation may form a whirling stream. Further, when an air-feeding pipe is fixed onto and along the shaft of the stirrers and air is fed along the shaft from behind the rotating blade of the stirrers, then the gas-liquid-contact effect is further enhanced. As for rotating blade, it has been found that those of a propeller type are more desirable than those of a paddle type.

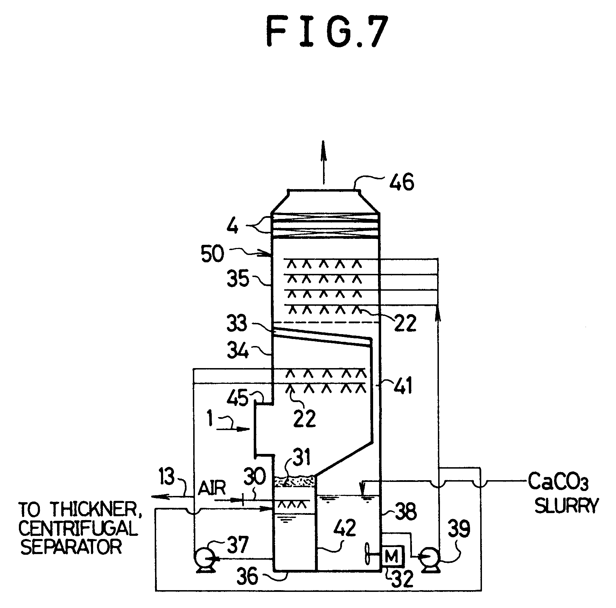

The embodiments illustrated in Figures 1, 5 and 6 with Figures 9 and 10 are directed to apparatus wherein circulating tank 38 is separately provided outside the absorption tower. However, as illustrated in Figure 7, when the lower part of the tower is divided into two by means of a partition wall 42, circulating tank 36 for the dust-removing part and circulating tank 38 for the absorbing part can be contained in the same tower thereby to be able to make the apparatus compact, in addition to the above-mentioned effectiveness. In the figure, numeral 41 refers to a downcomer part for the slurry.

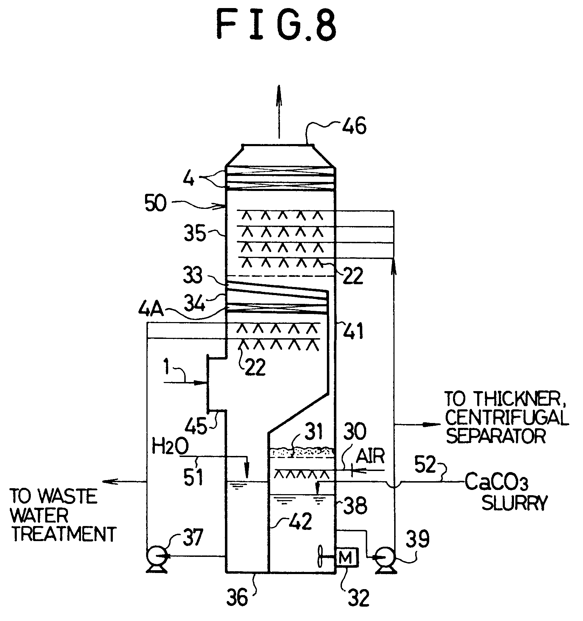

The above apparatus wherein dust contained in the exhaust gas is removed only by means of the slurry containing an absorbent is referred to as a dust-mixing system, but a dust-separation system as illustrated in Figure 8 may also be employed.

The apparatus shown in Figure 8 comprises: a vertically arranged, cylindrical tower body 50; a dust-removing part 34 and an absorption part 35 formed respectively in the lower space and the upper space inside the tower body; a circulation tank 36 for the dust-removing part, formed at the bottom part of the tower body 50; a pipe 51 for feeding water to the circulation tank 36; a pump 37 and a spray head 22 for feeding and spraying water which is inside the circulation tank 36 in the dust-removing part 34; a port 45 for feeding exhaust gas into the dust-removing part 34; a spray head 22 for spraying an absorbent liquid provided in the absorption part 35; a collector 33 for the absorbent liquid, provided below the spray head 22; a mist-eliminator 4A provided below the collector 33; a circulation tank 38 for the absorbent liquid, for receiving the absorbent liquid collected by the collector 33; pump 39 for feeding the absorbent liquid in the circulation tank 38 to the spray head 22 in the absorption part 35; a stirrer 32 provided inside the circulation tank 38; a means for feeding air onto the surface of or into the liquid in the circulation tank 38; a pipe 52 for feeding an absorbent slurry into the circulation tank 38; an exit 46 for the exhaust gas provided at the top part of the tower body 50; and a means for withdrawing a gypsum-containing slurry from the circulation tank 38.

As shown in Figure 8 the liquid-circulation systems for the dust-removing part 34 and the absorbing part 35 are separated by a partition wall 42. Water is circulated to dust-removing part 34 to remove dust from the exhaust gas and to cool the exhaust gas while the absorbent slurry is fed to absorbing part 35 and at the same time, air is fed to the upper part of circulating tank 38. Mist (or dust) contained in the exhaust gas is caught by the mist-eliminator 4A.

In the apparatus of Figure 8, the partition wall 42 can be replaced by a horizontal screen, by which a tank is divided into an upper part and a lower part. The upper part is provided with an air-feed pipe and a pipe for withdrawing a gypsum-containing liquid, whereby the pH in the upper part is lowered, while the lower part is provided with a pipe for feeding an absorbent slurry and a pipe, for circulating the absorbent slurry to the absorption part, whereby the pH in the lower part is increased. According to the above embodiment, high efficiency in the absorption of SOₓ and the oxidation of calcium sulfite is obtained.

### Example

An experiment of exhaust gas treatment was carried out employing the apparatus for wet type desulfurization as shown in Figure 1.

The test conditions are as follows:

| | |
|---|---|
| Gas quantity: | 3,000 Nm³/h; |
| SO₂ concentration: | 1,000 ppm; |
| percentage desulfurization: | 90 % or higher; |
| dust concentration at inlet: | 200 mg/Nm³; |
| dust concentration at exit: | 15 mg/Nm³ or lower. |

The test results were as follows:

| | |
|---|---|
| Gas quantity: | 3,000 Nm²/h; |
| SO₂ concentration: | 1,000 ppm; |
| percentage desulfurization: | 98%; |
| dust concentration at inlet: | 200 mg/Nm³; |
| dust concentration at exit: | 7mg/Nm³ |
| percentage excess of limestone: | 0.01 %; |
| quantity of sulfuric acid used: | 0Kg/h; |
| purity of gypsum produced as a by-product: | 96.3 %. |

According to the apparatus shown in Figure 1, there is no need to provide a tank for feeding an absorbent liquid to the oxidation tower and equipment around the oxidation tower thereby to make the apparatus compact. Also, since utilities for limestone and sulfuric acid are not required and also an air compressor for feeding air to the oxidation tower is not required, but an air blower may instead be employed, it is possible to reduce the electric power consumption of the apparatus. Further, since the dust-removing part, the absorption part, and the circulating tank for the dust-removing part are provided in a single tower, losses of gases due to drafts between one tower and another through the piping can be reduced. As the exhaust gas is fed to the absorption part and passed through the collector and the diffusion plate after being cooled in the dust-removing part, the material used to construct the collector and the diffusion plate need not be heat-resistant and may be relatively cheap.

## Claims

1. A circulation tank (36) adapted to be provided in an apparatus for wet type exhaust gas desulfurization and to receive an absorbent slurry into which sulfur oxide(s) contained in the exhaust gas is (are) absorbed outside the tank whereby calcium sulfite is formed, said tank including stirring means (32A-E) for stirring said slurry, a piping (39A) for feeding absorbing liquid to the tank (36) and means (37;13) for withdrawing the resulting slurry from the tank,
characterised in that said stirring means includes lower stirring means (32E) and upper stirring means (32A-D) disposed above said lower stirring means and mounted on the sides of the tank (36) and air-feeding means (30A-G) arranged only in the vicinity of the upper stirring means (32A-D).

2. A circulation tank according to claim 1, wherein said circulation tank (36) includes a plurality of said upper stirring means (32A,B) spaced at a predetermined circumferential distance from each other, and said lower stirring means (32E) is provided at the opposite side to a circulating pump.

3. A circulation tank according to claim 1 or claim 2, wherein said upper stirring means (32A,B) and said lower stirring means (32E) are propeller-type stirrers.

4. A circulation tank according to claim 3, wherein said air feeding means (30) is fixed onto and along a shaft and behind a rotating blade of the stirrers of the upper stirring means (32A-D).

## Patentansprüche

1. Umwälzbehälter (36) für die Verwendung in einer Vorrichtung zur nassen Abgasentschwefelung und zur Aufnahme eines absorbierenden Schlammes, in welchem im Abgas enthaltenes Schwefeloxid bzw. enthaltene Schwefeloxide außerhalb des Behälters absorbiert wird bzw. werden, wodurch Kalziumsulfit gebildet wird, wobei der Behälter eine Rühreinrichtung (32A-E) zum Aufrühren des Schlammes, eine Rohrleitung (39A) zum Zuführen von Absorptionsflüssigkeit zum Behälter (36) und eine Einrichtung (37;13) zum Abziehen des erhaltenen Schlammes aus dem Behälter aufweist,
dadurch gekennzeichnet, daß die Rühreinrichtung eine untere Rühreinrichtung (32E) und eine obere Rühreinrichtung (32A-D), die oberhalb der unteren Rühreinrichtung angeordnet und an den Seiten des Behälters (36) angebracht ist, sowie eine Luftzuführeinrichtung (30A-G) umfaßt, die nur in der Umgebung der oberen Rühreinrichtung (32A-D) angeordnet ist.

2. Umwälzbehälter nach Anspruch 1, bei welchem der Umwälzbehälter (36) eine Anzahl der oberen Rühreinrichtungen (32A,B) aufweist, die in vorbestimmten Umfangsabständen voneinander angeordnet sind, und die untere Rühreinrichtung (32E) auf der einer Umwälzpumpe gegenüberliegenden Seite vorgesehen ist.

3. Umwälzbehälter nach Anspruch 1 oder 2, bei welchem die obere Rühreinrichtung (32A,B) und die untere Rühreinrichtung (32E) Propellerrührer sind.

4. Umwälzbehälter nach Anspruch 3, bei welchem die Luftzuführeinrichtung (30) an und längs eines Schaftes und hinter einem rotierenden Flügel der Rührer der oberen Rühreinrichtung (32A-D) befestigt ist.

## Revendications

1. Cuve de circulation (36) adaptée à être située dans un appareil de désulfuration mouillée de gaz brûlé et à recevoir une bouillie absorbante dans laquelle l'oxyde ou les oxydes de soufre présents dans le gaz brûlé sont absorbés hors de la cuve de sorte que du sulfite de calcium soit formé, ladite cuve comprenant des agitateurs (32A-E) pour agiter ladite bouillie, un conduit (39A) pour distribuer le liquide absorbant dans la cuve (36) et des moyens (37; 13) pour extraire la bouillie résultante de la cuve,
caractérisée en ce que lesdits agitateurs comprennent un agitateur inférieur (32E) et des agitateurs supérieurs (32A-D) disposés au-dessus dudit agitateur inférieur et montés sur les côtés de la cuve (36) et des moyens d'alimentation en air (30A-G) disposés uniquement au voisinage des agitateurs supérieurs (32A-D).

2. Cuve de circulation selon la revendication 1, dans laquelle ladite cuve de circulation (36) comprend une pluralité desdits agitateurs supérieurs (32A, B) espacés les uns des autres d'une distance circonférentielle prédéterminée, et ledit agitateur inférieur (32E) est situé sur le côté à l'opposé d'une pompe de circulation.

3. Cuve de circulation selon la revendication 1 ou 2, dans laquelle lesdits agitateurs supérieurs (32A, B) et ledit agitateur inférieur (32E) sont des agitateurs du type à hélice.

4. Cuve de circulation selon la revendication 3, dans laquelle ledit moyen d'alimentation en air (30) est fixé sur la longueur d'un arbre et derrière une pale rotative des agitateurs supérieurs (32A-D).
